Europäisches Patentamt

European Patent Office

Office européen des brevets

(19)

(11) Veröffentlichungsnummer : **0 054 766**
**B1**

(12) # EUROPÄISCHE PATENTSCHRIFT

(45) Veröffentlichungstag der Patentschrift :
18.09.85

(21) Anmeldenummer : 81110035.3

(22) Anmeldetag : 01.12.81

(51) Int. Cl.⁴ : **C 08 F 236/10**

(54) **Carboxylgruppen enthaltende Synthesekautschukdispersionen, Verfahren zu ihrer Herstellung und ihre Verwendung.**

(30) Priorität : 13.12.80 DE 3047084

(43) Veröffentlichungstag der Anmeldung :
30.06.82 Patentblatt 82/26

(45) Bekanntmachung des Hinweises auf die Patenterteilung : 18.09.85 Patentblatt 85/38

(84) Benannte Vertragsstaaten :
BE DE FR GB IT NL

(56) Entgegenhaltungen :
EP-A- 0 007 044
DE-A- 1 814 209
GB-A- 1 072 694

(73) Patentinhaber : BAYER AG
Konzernverwaltung RP Patentabteilung
D-5090 Leverkusen 1 Bayerwerk (DE)

(72) Erfinder : Heins, Ferdinand, Dr.
Linzer Strasse 18
D-4019 Monheim-Baumberg (DE)
Erfinder : Matner, Martin, Dr.
Dorfstrasse 14
D-5068 Odenthal (DE)
Erfinder : Striegler, Hellmut, Dr.
Friedrich-Bayer-Strasse 12
D-5090 Leverkusen (DE)

## Beschreibung

Die Herstellung wäßriger carboxylgruppenhaltiger Synthesekautschukdispersionen ist aus US-Re-27 269/3 256 234 bekannt. Da in Gegenwart von Wasser die Salze der verwendeten, ethylenisch ungesättigten Carbonsäuren kaum in den anderen wasserunlöslichen Monomeren Diolefin und aromatische Vinylverbindungen löslich sind, arbeitet man bekanntlich bei niedrigen pH-Werten zwischen 5 und 2.

Bei diesen pH-Werten ist jedoch die Auswahl an brauchbaren Emulgatoren beschränkt. Es können im wesentlichen nur anionische Emulgatoren, bei denen die zugrundeliegenden Säuren eine hohe Dissozationskonstante besitzen, verwendet werden. In der genannten US-Re werden bezogen auf Monomere 4 Gew.-% an Emulgator zugegeben.

Ähnlich verfährt GB-PS-1 072 694, bei der bei pH-Werten unter 7 copolymerisiert wird, und das pH nach der Polymerisation auf über 7 angehoben wird. Bei dem Verfahren werden 5 Gew.-% Emulgator bezogen auf Monomere eingesetzt.

Die Neutralisation oder Einstellung eines pH-Wertes größer 7 ist erforderlich, da sonst bei den Verarbeitungsmaschinen leicht Korrosion auftreten würde. Infolge der Neutralisation sinkt die Oberflächenspannung der carboxylgruppenhaltigen Latices stark ab. Mit dem Verringern der Oberflächenspannung steigt jedoch die Schaumneigung der Latices beträchtlich, wodurch beim Verarbeiten der Latices, insbesondere auf schnellaufenden Maschinen erhebliche Störungen auftreten.

Um einerseits die unerwünschte Schaumneigung zu vermeiden, andererseits möglichst koagulat- und stippenfreie, stabile Latices bereitzustellen und drittens aus wirtschaftlichen Gründen die Menge der ethylenisch ungesättigten Carbonsäuren möglichst klein zu halten, sind verschiedene Wege vorgeschlagen worden. Nach DE-AS-1 814 209 werden Synthesekautschukdispersionen mit hoher Oberflächenspannung bereitgestellt, die aus 74,5 bis 20 Gew.-% Diolefinen, 25,0 bis 70 Gew.-% Styrol, das gegebenenfalls ganz oder teilweise durch andere nichtdissoziierende Monoolefine ersetzt sein kann, und 0,5 bis 10 Gew.-% monoethylenisch ungesättigter Carbonsäuren bestehen, deren Herstellung in Gegenwart von 0,025 bis 0,1 Gew.-% eines Emulgators vom Sulfonattyp und 0,5 bis 3 Gew.-% eines Polyethylenglykols sowie in Gegenwart von geringen Mengen eines Eisensalzes hergestellt werden. Diese Latices sind zwar koagulat- und stippenarm, bei der Verarbeitung schaumfrei und benötigen nur geringe Mengen ethylenisch ungesättigter Carbonsäuren, jedoch beeinflußt der erforderliche Zusatz von Eisen ungünstig die Alterung der mit diesen Dispersionen hergestellten Filme, die auch wegen des Zusatzes an Polyethylenglykol so hydrophil sind, daß bestimmte Anwendungsgebiete, wie die Imprägnierung von Nadelfilzauslegeware, verschlossen bleiben.

Nach der US-PS-3 575 913 werden für Papierbeschichtung geeignete Latices mit verbesserter Pigmentstabilität dadurch erhalten, daß man 0,5 bis 2,5 Gew.-% einer monoethylenisch ungesättigten Dicarbonsäure einer Reaktionszone zuführt, anschließend die Monomerhauptmenge aus Arylvinylmonomer, wie Styrol und einem konjugiertem Dien, wie Butandien- (1,3) dem Reaktor zugibt, unter Verwendung beispielsweise eines Peroxodisulfat- initiators bis mindestens etwa 90 % Monomeren-Umsatz polymerisiert und anschließend 1 bis 5 Gew.-% einer Acrylsäure zugibt und bei Temperaturen zwischen 70 und 100 °C bis zu einem Umsatz der Monomeren von wenigstens 98 % polymerisiert. In diesem Verfahren werden vergleichsweise hohe Anteile an ungesättigten Mono- und Dicarbonsäuren, unter denen auch die Itaconsäure genannt ist, eingesetzt. Die Polymerisation wird unter Zusatz von anionischen Emulgatoren ausgeführt.

Nach US-PS-3 324 066 werden carboxylierte Synthesekautschukdispersionen mit 1 bis 10 Gew.-% wenigstens einer monoethylenisch ungesättigten Carbonsäure in aufwendiger Weise unter Verwendung von mehr als 1 Gew.-%, bezogen auf die Gesamtmonomerenmenge, an anionischem Dispergiermittel hergestellt. Sofern Itaconsäure verwendet wird, geschieht dies im Gemisch mit anderen ungesättigten Säuren, wobei die Säurekonzentration bezogen auf die Gesamtmonomerkonzentration 4 % beträgt.

Schaumarme Latices, frei von Stippen, werden nach der DE-OS-24 18 419 durch Polymerisation von 73,5 bis 18,5 Gew.-Tln Butadien, 20 bis 80 Gew.-Tln Styrol, 0 bis 10 Gew.-Tln Acrylnitril, 0 bis 5 Gew.-Tln ethylenisch ungesättigter Carbonsäureamide oder deren Methylolderivate und 1,5 bis 10 Gew.-Tln ethylenisch ungesättigter Carbonsäuren in wäßriger Emulsion, in Anwesenheit eines radikalbildenden Initiators und eines Emulgators dann gewonnen, wenn die ethylenisch ungesättigten Carbonsäuren ein Gemisch aus 1,0 bis 4 Gew.-Tln Acrylsäure und 0,5 bis 6 Gew.-Tln Methacrylsäure und der Emulgator ein anionischer Emulgator in einer Menge von weniger als 0,5 Gew.-Tln, bezogen auf Gesamtmonomere, ist.

Es wurde nun gefunden, daß man stippenfreie, schaumarme, carboxylgruppenhaltige Synthesekautschukdispersionen mit anwendungstechnischen Vorteilen unter Einsatz möglichst geringer Mengen ethylenisch ungesättigter Carbonsäure herstellen kann, wenn man als ethylenisch ungesättigte Carbonsäure Itaconsäure verwendet.

Die Erfindung betrifft daher Verfahren zur Herstellung wäßriger Synthesekautschukdispersionen, die ein Copolymerisat aus 0,3 bis 1,0 Gew.-Teilen Itaconsäure und 99,0 bis 99,7 Gew.-Teilen eines Gemisches aus 10 bis 90 Gew.-Teilen eines oder mehrerer acyclischer Konjugierter Diene mit 4 bis 9 Kohlenstoffatomen und 10 bis 90 Gew.-

Teilen eines oder mehrerer Arylvinylmonomerer mit 8 bis 12 Kohlenstoffatomen und/oder (Meth) Acrylnitril, wobei die Menge an (Meth)-Acrylnitril maximal 50 Gew.-Teile beträgt, und wobei bis zu 25 Gew.-Teile der nichtdissoziierenden Monomeren durch ein oder mehrere andere nichtdissoziierende copolymerisierbare Monomere ersetzt sein können, enthalten und mit 0,05 bis 0,5 Gew.-%, bezogenauf Copolymerisat, eines anionischen Emulgators stabilisiert sind, dadurch gekennzeichnet, daß man im Chargenbetrieb in einem mit einer Rührvorrichtung versehenen Reaktor einen Teil des Wassers, einen Teil oder vorzugsweise die Gesamtmenge der Itaconsäure, eine Base, die Gesamtmenge oder einen Teil des anionischen Emulgators sowie einen Teil der Monomeren vorlegt, so daß der pH- Wert der gerührten Vorlage zwischen 3,5 und 6,0 liegt, die Polymerisation bei einer Temperatur von mindestens 70 °C durch Zugabe eines Teils von 0,5 bis 1,5 Gew.- %, bezogen auf Gesamtmonomere, eines Ammonium- und/oder Alkaliperoxodisulfates initiiert und kontinuierlich mindestens einen nicht-wäßrigen Strom der übrigen Monomeren und mindestens einen wäßrigen Stom, der die Restmenge an Ammonium- und/oder Alkaliperoxodisulfat enthält, hinzuführt, während der Reaktorinhalt zwischen 75 °C und 150 °C gehalten wird, bis die Monomeren nahezu vollständig umgesetzt sind.

Überraschenderweise sind die erfindungsgemäß hergestellten Synthesekautschukdispersionen trotz ihres geringen Emulgator- und Carbonsäuregehalts frei von Ausscheidungen und weisen nach Einstellung eines alkalischen pH-Bereiches eine extrem hohe mechanische Stabilität auf. Aufgrund ihrer hohen Oberflächenspannung auch nach alkalischer Einstellung zeigen sie eine besonders gute Verarbeitbarkeit, ferner eine hervorragende Haftung zum jeweils eingesetzten Substrat. Die Dispersionen enthalten vorzugsweise keine Polyalkylenglykole.

Gegebenenfalls kann man das Verfahren der Erfindung so modifizieren, daß man nach der Initiierung mit der kontinuierlichen Zugabe der Zulaufströme eine gewisse Zeit wartet, um einen Keimlatex zu bilden, und nach Ablauf dieser Zeit mit der kontinuierlichen Zugabe der Zuläufe beginnt.

Geeignete acyclische konjugierte Diene mit 4 bis 9 Kohlenstoffatomen sind z. B. Butadien-(1,3), 2-Methylbutadien-(1,3) (Isopren), 2,3-Dimethylbutadien-(1,3), Piperylen, 2-Neopentylbutadien-(1,3) und andere substituierte Diene wie beispielsweise 2-Chlorbutadien-(1,3) (Chloropren), 2-Cyanobutadien-(1,3) sowie substituierte geradkettige konjugierte Pentadiene und geradkettige oder verzweigte Hexadiene. Die Fähigkeit, mit Arylvinylmonomeren und (Meth) Acrylnitril besonders gut zu copolymerisieren, machen Butadien-(1,3) zum bevorzugten Monomer.

Geeignete Arylvinylmonomere sind solche, bei denen die gegebenenfalls in α-Stellung alkylsubstituierte Vinylgruppe direkt an einen aus 6 bis 10 Kohlenstoffatomen bestehenden aromatischen Kern gebunden ist. Beispielhaft seien genannt : Styrol und substituierte Styrole wie 4-Methylstyrol, 3-Methylstyrol, 2,4-Dimethylstyrol, 2,4-Diethylstyrol, 4-Isopropylstyrol, 4-Chlorstyrol, 2,4-Dichlorstyrol, Divinylbenzol, α-Methylstyrol und Vinylnaphthalin. Aus Gründen der Zugänglichkeit und wegen der Fähigkeit insbesondere mit Butadien-(1,3) hervorragen zu copolymerisieren, stellt Styrol das bevorzugte Monomer dar.

Wie ausgeführt können bis zu 25 Gew.-Teile der nichtdissoziierenden Monomeren durch eines oder mehrere von mit den oben aufgeführten Monomeren copolymerisierbaren Monomeren ersetzt sein. Hierzu zählen insbesondere Ester der Acryl- und/oder Methacrylsäure von Alkoholen mit bis zu 8 Kohlenstoffatomen sowie Diester aus Alkandiolen und $\alpha, \beta$-monoethylenisch ungesättigten Monocarbonsäuren wie Ethylenglykoldiacrylat und Butandiol-(1,4)-diacrylat, Amide der $\alpha, \beta$-monoethylenisch ungesättigten Mono- und Dicarbonsäuren wie Acrylamid und Methacrylamid und deren N-Methylolderivate sowie N-Alkoxymethyl- und N-Acyl-(meth)-acrylamide mit 1 bis 4 Kohlenstoffatomen in der Alkoxygruppe, z. B. N-Methylol-(meth)-acrylamid, N-Methoxymethyl-(meth)-acrylamid, N-n-Butoxymethyl-(meth)-acrylamid und N-Acetoxymethyl-(meth)-acrylamid. Als weitere Comonomere kommen Vinylester von Carbonsäuren mit 1 bis 18 Kohlenstoffatomen, insbesondere Vinylacetat und Vinylpropionat, Vinylchlorid und Vinylidenchlorid, Vinylether wie Vinylmethylether, Vinylketone wie Vinylethylketon und heterocyclische Monovinylverbindungen wie Vinylpyridin in Betracht.

Das erfindungsgemäße Verfahren wird bei Temperaturen von mindestens 75 °C und bei pH-Werten von 3,5 bis 6 durchgeführt. Bei diesen pH-Werten sind als Emulgatoren solche vom Sulfat- und Sulfonattyp geeignet. Typische Vertreter sind höhere Fettalkoholsulfate, höhere Alkylsulfonate und Alkylarylsulfonate sowie deren Kondensationsprodukte mit Formaldehyd, höhere Hydroxyalkylsulfonate, Salze der Sulfobernsteinsäureester und sulfatierte Ethylenoxidaddukte.

Die Gesamtmenge des bei dem erfindungsgemäßen Verfahren als Initiator verwendeten Peroxodisulfats beträgt 0,5 bis 1,5 Gew.-Teile, bezogen auf die Gesamtmenge an Monomeren. Als Initiatoren geeignet sind Salze der Peroxodischwefelsäure wie Natrium-, Kalium- oder Ammoniumperoxodisulfat.

Zur Pufferung des Ansatzes wird die Reaktorvorlage und gegebenenfalls ein wäßriger Zulauf mit Alkali versetzt. Beispielhaft seien erwähnt : Natrium- und Kaliumhydroxid, Natrium- und Kaliumcarbonat sowie Natrium- und Kaliumhydrogencarbonat.

Gegebenenfalls kann die Emulsionspolymerisation in Gegenwart von Polymerisationshilfsmitteln wie Chelierungsmitteln und Beschleunigern durchgeführt werden. Ebenso können Kettenübertragungsmittel wie z. B. Tetrabrommethan, Bromethylbenzol, Alkohole, höhere

Alkylmercaptane, Dialkyldixanthogenate, Thioglykolsäure, deren Salze und Ester bei der Polymerisation mitverwendet werden. Die zu verwendende Art und Menge hängt u.a. von der Wirksamkeit der Verbindungen und der Menge des eingesetzten Diens ab und ist dem Fachmann geläufig.

Nach Beendigung der Polymerisation bei nahezu vollständigem Umsatz der Monomeren kann der Latex in an sich bekannter Weise von Restmonomeren befreit und zur Erhöhung seiner mechanischen Stabilität auf einen pH-Wert von etwa 7 bis 11 eingestellt werden.

Die nach dem erfindungsgemäßen Verfahren erhaltenen Dispersionen haben bei pH-Werten über 6,0 eine Oberflächenspannung von 45 bis 70, bevorzugt von 50 bis 60 mN/m. Ihr Feststoffgehalt kann zwischen 1 und 65 Gew.- % liegen und beträgt vorzugsweise 30 bis 50 Gew.- %. Die Latices, die weitgehend oder vollständig frei von Koagulat und Stippen sind, eignen sich u.a. zur Bindung von Vliesen, zur Imprägnierung und Beschichtung von textilen Materialien und Papier und zur Herstellung von wäßrigen Anstrichbinderformulierungen.

Die folgenden Beispiele erläutern das erfindungsgemäße Verfahren.

Beispiel 1

In einem 250-l-Kessel mit Rührer werden 560 g Itaconsäure und 107 g Natrium-4-dodecylbenzolsulfonat (75 % Wirkstoff) in 14 kg Wasser gelöst. Mit konz. wäßriger Ammoniak-Lösung wird pH 4 - 5 eingestellt. Nach Evakuieren des Kessels werden in die gerührte Vorlage 6,96 kg einer homogenen Mischung aus 44,94 kg Styrol, 24,5 kg Butadien und 140 g tert.-Dodecylmercapatan (Zulauf 1) abgelassen, und die Polymerisation nach Aufheizen der Emulsion auf 85 °C mit einer Lösung von 70 g Natriumperoxodisulfat in 1,4 kg Wasser initiiert. Nach einer Stunde Reaktionszeit bei 85 °C werden der Rest des Zulaufs 1 und eine Lösung von 700 g Natriumperoxodisulfat, 187 g Natrium-4-dodecylbenzolsulfonat (75 % Wirkstoff) und 70 g Tetranatrium-ethylen-diamin-N, N, N′, N′-tetraacetat in 52,5 kg Wasser (Zulauf 2) während jeweils sechs Stunden bei einer Polymerisationstemperatur von 85 °C gleichmäßig zudosiert. Nach Beendigung der Zuläufe wird der Ansatz noch zwei Stunden bei 85 °C gerührt.

Man erhält eine Synthesekautschukdispersion mit einem Feststoffgehalt von 49,2 %, einem mittleren Teilchendurchmesser von 200 nm und einem pH von 4,8. Nach Einstellung von pH 9 mit Ammoniak beträgt die Oberflächenspannung 64 mN/m. Bei diesem pH-Wert zeigt der Latex eine hervorragende mechanische Stabilität und eine äußert geringe Schaumneigung.

Vergleichsbeispiel 1

Beispiel 1 wird unter Austausch der Itaconsäure durch die gleiche Gewichtsmenge Acrylsäure wiederholt. Man erhält eine so große Menge Koagulat, daß der Ansatz verworfen werden muß.

Vergleichsbeispiel 2

Beispiel 1 wird unter Austausch der Itaconsäure durch die gleiche Gewichtsmenge Methacrylsäure wiederholt. Der Ansatz erhält noch mehr Ausscheidungen als bei Verwendung der Acrylsäure und muß ebenfalls verworfen werden.

Beispiel 2

In einem 250-l-Kessel mit Rührer werden 280 g Itaconsäure und 187 g Natrium-4-dodecylbenzolsulfonat (75 % Wirkstoff) in 14 kg Wasser gelöst. Mit konz. wäßriger Ammoniak-Lösung wird pH 4 - 5 eingestellt. Nach Evakuieren des Kessels werden in die gerührte Vorlage 6,96 kg einer homogenen Mischung aus 45,22 kg Styrol, 24,5 kg Butadien und 140 g tert.-Dodecylmercaptan (Zulauf 1) abgelassen, und die Polymerisation nach Aufheizen der Emulsion auf 85 °C mit einer Lösung von 70 g Natriumperoxodisulfat in 1,4 kg Wasser initiiert. Nach einer Stunde Reaktionszeit bei 85 °C werden der Rest des Zulaufs 1 und eine Lösung von 700 g Natriumperoxodisulfat, 187 g Natrium-4-dodecylbenzolsulfonat (75 % Wirkstoff) und 70 g Tetranatrium-ethylendiamin-N, N, N′, N′-tetraacetat in 52,5 kg Wasser (Zulauf 2) während jeweils sechs Stunden bei einer Polymerisationstemperatur von 85 °C zudosiert. Nach Beendigung der Zuläufe wird der Ansatz noch zwei Stunden bei 85 °C gerührt.

Man erhält eine Synthesekautschukdispersion mit einem Feststoffgehalt von 50,9 %, einem mittleren Teilchendurchmesser von 196 nm und einem pH von 3,6. Nach Einstellung von pH 9 mit Ammoniak beträgt die Oberflächenspannung 58 mN/m. Bei diesem pH-Wert zeigt der Latex eine hervorragende mechanische Stabilität und eine äußerst geringe Schaumneigung.

Die in Beispiel 1 und 2 beschriebenen alkalisch gestellten Kautschuklatices lassen sich zur Nadelfilzimprägnierung hervorragend verwenden.

Beispiel 3

In einem 250-l-Kessel mit Rührer werden 187 g Natrium-4-dodecylbenzolsufonat (75 % Wirkstoff) und 140 g Italconsäure in 14 kg Wasser gelöst. Mit konz. wäßriger Ammoniak-Lösung wird pH 4 - 5 eingestellt. Nach Evakuieren des Kessels werden in die gerührte Vorlage 6,96 kg einer homogenen Mischung aus 44,94 kg Styrol, 24,5 kg Butadien und 140 g tert.-Dodecylmercaptan (Zulauf 1) abgelassen, und die Polymerisation nach Aufheizen der Emulsion auf 85 °C mit einer Lösung von 70 g Natriumperoxodisulfat in 1,4 kg Wasser initiiert. Nach einer Stunde Reaktionszeit bei 85 °C werden der Rest des Zulaufs 1 und eine Lösung von 700 g Natriumperoxodisulfat, 187 g Natrium-4- dodecylbenzolsulfonat (75 % Wirkstoff) und 70 g Tetranatrium-ethylendiamin-N, N, N', N'-tetraacetat in 28 kg Wasser (Zulauf 2) sowie eine Lösung von 420 g Itaconsäure in 24,5 kg Wasser (Zulauf 3) während jeweils sechs Stunden bei einer Polymerisationstemperatur von 85 °C zudosiert. Nach Beendigung der Zuläufe wird der Ansatz noch zwei Stunden bei 85 °C gerührt.

Man erhält eine Synthesekautschukdispersion mit einem Feststoffgehalt von 50,1 %, einem mittleren Teilchendurchmesser von 237 nm und einem pH von 2,1. Die Oberflächenspannung beträgt 58 mN/m (Ammoniak) bei pH 9.

Auch dieser Kautschuklatex läßt sich zur Imprägnierung von Nadelfilzen verwenden.

Beispiel 4

In einem 250-I-Kessel mit Rührer werden 420 g Itaconsäure, 140 g Natriumhydrogencarbonat und 70 g Natriumlaurylsulfat in 17,5 kg Wasser gelöst. Nach Evakuieren des Kessels werden in die gerührte Vorlage 10,45 kg einer homogenen Mischung aus 38,5 kg Butadien, 20,85 kg Styrol, 10,5 kg Acrylnitril und 70 g tert.-Dodecylmercaptan (Zulauf 1) abgelassen, und die Polymerisation nach Aufheizen der Emulsion auf 80 °C mit einer Lösung von 140 g Ammoniumperoxodisulfat in 1,4 kg Wasser initiiert. Nach 30 Minuten Reaktionszeit bei 80 °C werden der Rest des Zulaufs 1 während sieben Stunden und eine wäßrige Lösung von 560 g Ammoniumperoxodisulfat, 210 g Natriumlaurylsulfat und 140 g Natriumhydrogencarbonat in 49 kg Wasser (Zulauf 2) während acht Stunden bei einer Polymerisationstemperatur von 80 °C zudosiert. Nach Beendigung der Zuläufe wird der Ansatz noch zwei Stunden bei 80 °C gerührt.

Man erhält eine Synthesekautschukdispersion mit einem Feststoffgehalt von 51,0 %, einem mittleren Teilchendurchmesser von 288 nm und einem pH von 6,0. Die Oberflächenspannung beträgt 48 mN/m (Ammoniak) bei pH 9.

Dieser Kautschuklatex läßt sich zur Imprägnierung von Cellulosepappen verwenden.

Beispiel 5

In einem 250-I-Kessel mit Rührer werden 700 g Itaconsäure und 187 g Natrium-4-dodecylbenzolsulfonat (75 % Wirkstoff) in 14 kg Wasser gelöst. Mit konz. wäßriger Ammoniak-Lösung wird pH 4 - 5 eingestellt. Nach Evakuieren des Kessels werden in die gerührte Vorlage 6,74 kg einer homogenen Mischung aus 42,0 kg Styrol, 25,2 kg Butadien und 210 g tert.-Dodecylmercaptan (Zulauf 1) sowie 350 g einer 60 %igen wäßrigen Lösung von N-Methylolacrylamid abgelassen, und die Polymerisation nach Aufheizen der Emulsion auf 80 °C mit einer Lösung von 140 g Ammoniumperoxodisulfat in 1,4 kg Wasser initiiert. Nach 15 Minuten wird die Temperatur der Vorlage auf 85 °C erhöht, und der Rest des Zulaufs 1, eine Lösung von 840 g Ammoniumperoxodisulfat, 187 g Natrium-4-dodecylbenzolsulfonat (75 % Wirkstoff) und 70 g Tetranatrium-ethylendiamin-N, N, N', N'-tetraacetat in 70 kg Wasser (Zulauf 2) sowie 3,15 kg einer 60 %igen wäßrigen Lösung von N-Methylolacrylamid (Zulauf 3) während jeweils sechs Stunden bei einer Polymerisationstemperatur von 85 °C zudosiert. Nach Beendigung der Zuläufe wird der Ansatz noch zwei Stunden bei 85 °C gerührt.

Man erhält eine Synthesekautschukdispersion mit einem Feststoffgehalt von 44,0 %, einem mittleren Teilchendurchmesser von 258 nm und einem pH von 4,4. Die Oberflächenspannung beträgt 48 mN/m (Ammoniak) bei pH 7.

Dieser Kautschuklatex läßt sich zur Bindung von Vliesen verwenden.

**Patentanspruch**

Verfahren zur Herstellung wäßriger Synthesekautschukdispersionen, die ein Copolymerisat aus 0,3 bis 1,0 Gew.-Teilen Itaconsäure und 99,0 bis 99,7 Gew.-Teilen eines Gemisches aus 10 bis 90 Gew.-Teilen eines oder mehrerer acyclischer Konjugierter Diene mit 4 bis 9 Kohlenstoffatomen und 10 bis 90 Gew.-Teilen eines oder mehrerer Arylvinylmonomerer mit 8 bis 12 Kohlenstoffatomen und/oder (Meth) Acrylnitril, wobei die Menge an (Meth)-Acrylnitril maximal 50 Gew.-Teile beträgt, und wobei bis zu 25 Gew.-Teile der nichtdissoziierenden Monomeren durch ein oder mehrere andere nichtdissoziierende copolymerisierbare Monomere ersetzt sein können, enthalten und mit 0,05 bis 0,5 Gew.- %, bezogenauf Copolymerisat, eines anionischen Emulgators stabilisiert sind, dadurch gekennzeichnet, daß man im Chargenbetrieb in einem mit einer Rührvorrichtung versehenen Reaktor einen Teil des Wassers, einen Teil oder vorzugsweise die Gesamtmenge der Itaconsäure, eine Base, die Gesamtmenge oder einen Teil des anionischen Emulgators sowie einen Teil der Monomeren vorlegt, so daß der pH- Wert der gerührten Vorlage zwischen 3,5 und 6,0 liegt, die Polymerisation bei einer Temperatur von mindestens 70 °C durch Zugabe eines Teils von 0,5 bis 1,5 Gew.- %, bezogen auf Gesamtmonomere, eines Ammonium- und/oder Alkaliperoxodisulfates initiiert und kontinuierlich mindestens einen nicht-wäßrigen Strom der übrigen Monomeren und mindestens einen wäßrigen Stom, der die Restmenge an Ammonium- und/oder Alkaliperoxodisulfat enthält, hinzuführt, während der Reaktorinhalt zwischen 75 °C und 150 °C gehalten wird, bis die Monomeren nahezu vollständig umgesetzt sind.

**Claim**

Process for the preparation of aqueous synthetic rubber dispersions which contain a copolymer of 0.3 to 1.0 parts by weight of itaconic acid and 99.0 to 99.7 parts by weight of a mixture of 10 to 90 parts by weight of one or more acyclic conjugated dienes having 4 to 9 carbon atoms and 10 to 90 parts by weight of one or more aryl vinyl monomers having 8 to 12 carbon atoms and/or (meth)acrylonitrile, the quantity of (meth)acrylonitrile being at most 50 parts by weight and it being possible for up to 25 parts by weight of the non-dissociating monomers to be replaced by one or more other non-dissociating copolymerisable monomers, and which are stabilised with 0.05 to 0.5 % by weight, based on the copolymer, of an anionic emulsifier, characterised in that, using batch operation, a portion of the water, a portion or preferably the total quantity of the itaconic acid, a base, the total quantity or a portion of the anionic emulsifier and a portion of the monomers are initially introduced into a reactor equipped with a stirring device, such that the pH value of the stirred initially introduced mixture is between 3.5 to 6.0, the polymerisation is initiated at a temperature of at least 70 °C by the addition of a portion of 0.5 to 1.5 % by weight, based on the total quantity of monomers, of an ammonium and/or alkali metal peroxodisulphate and at least one non-aqueous stream of the remaining monomers and at least one aqueous stream, which contains the remaining quantity of ammonium and/or alkali metal peroxodisulphate, are added continuously, while the contents of the reactor are kept at between 75 °C and 150 °C, until the monomers are almost completely converted.

**Revendication**

Procédé de production de dispersions aqueuses de caoutchouc de synthèse, qui contiennent un copolymère de 0,3 à 1,0 partie en poids d'acide itaconique et de 99,0 à 99,7 parties en poids d'un mélange de 10 à 90 parties en poids d'un ou plusieurs diènes conjugués acycliques ayant 4 à 9 atomes de carbone et de 10 à 90 parties en poids d'un ou plusieurs monomères arylvinyliques ayant 8 à 12 atomes de carbone et/ou de (méth)acrylonitrile, la quantité de (méth)acrylonitrile s'élevant au maximum à 50 parties en poids, et jusqu'à 25 parties en poids des monomères non dissociables pouvant être remplacés par un ou plusieurs autres monomères copolymérisables non dissociables, et qui sont stabilisées avec 0,05 à 0,5 % en poids, par rapport au copolymère, d'un émulsionnant anionique, caractérisé en ce que, lorsqu'on travaille en discontinu, on charge préalablement dans un réacteur muni d'un dispositif agitateur une partie de l'eau, une partie ou de préférence la totalité de l'acide itaconique, une base, la quantité totale ou une partie de l'émulsionnant anionique ainsi qu'une partie des monomères, de manière que le pH de la charge préalable agitée ait une valeur comprise entre 3,5 et 6,0, on déclenche la polymérisation à une température d'au moins 70 °C par l'addition d'une partie de 0,5 à 1,5 % en poids, par rapport aux monomères totaux, d'un peroxodisulfate d'ammonium et/ou de métal alcalin et on ajoute en continu au moins un courant non aqueux des autres monomères et au moins un courant aqueux qui contient la quantité restante de peroxodisulfate d'ammonium et/ou de métal alcalin, tandis que l'on maintient le contenu du réacteur entre 75 °C et 150 °C jusqu'à ce que les monomères aient réagi à peu près totalement.